# EUROPEAN PATENT SPECIFICATION

(11) **EP 3 737 592 B1**
(45) Date of publication and mention of the grant of the patent: **09.03.2022**
(21) Application number: 18700867.7
(22) Date of filing: 08.01.2018
(51) Int. Cl.: B60S 1/52, B60S 1/34

(54) **A WINDSCREEN WIPER ARM, PARTICULARLY FOR AUTOMOBILES**
SCHEIBENWISCHERARM, INSBESONDERE FÜR KRAFTFAHRZEUGE
BRAS D'ESSUIE-GLACE, EN PARTICULIER POUR AUTOMOBILES

(43) Date of publication of application: 18.11.2020
(73) Proprietor: Federal-Mogul S.A., 6790 Aubange (BE)
(72) Inventor: SEILLER, Guillaume, 68150 Ribeauvillé (FR)
(74) Representative: Arnold & Siedsma
(86) International application number: PCT/EP2018/050352
(87) International publication number: WO 2019/134756

(56) References cited:
- WO-A1-2013/149676
- DE-A1-102015 224 631
- FR-A1- 2 286 735
- JP-A- 2002 302 019
- JP-A- 2002 308 064
- US-A1- 2003 009 841

## Description

The present invention relates to a windscreen wiper arm, particularly for automobiles, being able to oscillate to-and-from between a first reversal position and a second reversal position, and comprising a wiper arm member having a substantially U-shaped cross-section, as well as a wiper rod, wherein said wiper arm member at one end thereof is arranged to be pivotally connected to a mounting head mounted on a drive shaft, and wherein said wiper arm member at another end thereof is rigidly connected to said wiper rod, wherein said wiper rod at one end thereof extends inside the U-shaped cross-section of the wiper arm member, and wherein said wiper rod at another end thereof is arranged to be connected to an elongated wiper blade to be placed in abutment with a windscreen to be wiped.

The present invention particularly relates to such a windscreen wiper arm for an elongated wiper blade in the form of a so-called flat blade, wherein an elastic elongated carrier element is provided, and wherein said flat blade includes at least one longitudinal groove, in which groove a longitudinal strip (also called a "flexor") of said carrier element is disposed. There is no restriction to the use of only one longitudinal strip forming the elastic carrier element that is particularly located in a central longitudinal groove of the flat blade. Instead, said carrier element may also comprise two longitudinal strips, wherein said strips are disposed in opposite longitudinal grooves of the flat blade. Said groove(s) may be closed at one outer end. Said flat blade comprises a connecting device (also indicated as a "connector") arranged to be connected to said windscreen wiper arm. Preferably, said connector is made in one piece, also called a "one piece connector". Particularly, said flat blade comprises a spoiler at a side thereof facing away from the windscreen to be wiped, wherein said flat blade and said spoiler are preferably made in one piece through extrusion. The present invention is not limited to the use in said flat blades, but can also be applied in traditional windscreen wiper devices having yokes.

Said mounting head is usually fixed for rotation to said shaft, wherein said shaft is rotatable alternately in a clockwise and in a counter-clockwise sense carrying said mounting head into rotation. Thus, in turn said mounting head draws said connecting device into rotation and thereby moves said flat blade. In the alternative, said mounting head is fixed for translation to a carriage, wherein said carriage can be translated alternately in a one linear direction and in another counter linear direction carrying said mounting head into translation. The present invention can therefore be used for circular or linear movement of said mounting head.

Such a windscreen wiper arm is known from German patent publication no. 34 33 106 (SWF Auto-Electric GmbH). The oscillating windscreen wiper arm described therein comprises an arm member pivotally connected to the mounting head by means of a pivot pin, wherein the arm member has a substantially U-shaped cross-section near said pivot pin comprising two side walls, wherein a part of the mounting head extends between the side walls and beyond said pivot pin, and wherein a spring is hooked with its first end on a pin on the mounting head. Said arm member is connected to a wiper rod, wherein one end of the wiper rod extends inside the U-shaped cross-section of the arm member. The side walls of the arm member are locally folded around the wiper rod, while a holder is folded around said end of the rod. The spring of this prior art windscreen wiper arm is hooked with its first end on the pin on the mounting head and with its second end on two eyes of the holder.

A disadvantage of the windscreen wiper arm known from the above German patent publication is that that windscreen wiper arm is often used in combination with a nozzle fixedly mounted on (or below) a bonnet of a car for spraying a washing liquid onto the car's windscreen to be wiped. In practice it has become apparent that the windscreen cannot effectively be cleaned by a combination of the known windscreen wiper arm and the nozzle, as the nozzle emits the washing fluid thereon at a large distance relative to the windscreen, so that a relatively large amount of the washing fluid does not effectively reach a wiping pattern on the windscreen to be wiped. Further, it has become apparent that in the prior art a large amount of liquid (consumption) is required in an attempt to clean the windscreen to be wiped. Further, if the washing fluid is spread onto the car's body instead of onto the windscreen to be wiped, it may damage the car. Indeed, ethanol, methanol and other components of the washing fluid are believed to have a corrosive effect on paint, rubber, car wax and plastics, for example.

It is an object of the invention to obviate these disadvantages, in the sense that at minimum costs - without using complex machinery and additional tools - a simple windscreen wiper arm is proposed to effectively clean a windscreen to be wiped, without damaging parts of a car, wherein less washing liquid is required to clean the windscreen to be wiped.

Thereto, according to the invention a windshield wiper arm mentioned in the preamble is characterized according to claim 1. Particularly, said nozzle is snapped onto said wiper rod near said one end thereof that extends inside the U-shaped cross-section of the wiper arm member. By connecting the nozzle directly to the wiper rod and inside the U-shaped cross-section of the wiper arm member, the nozzle is not only fixed to the windscreen wiper arm in a reliable and controllable manner, although detachably in case of repair or replacement of the nozzle, but the nozzle is also hidden from the outside and thus invisible for a driver and people outside. Further, by connecting the nozzle to the wiper rod and inside the U-shaped cross-section of the wiper arm member, the nozzle is located at a very small distance relative to the windscreen to be wiped and is allowed to directly follow any oscillatory movement of the windscreen wiper arm, so that the washing fluid exiting the nozzle can be effectively sprayed thereon, with all positive consequences involved as to effective cleaning of the windscreen to be wiped and safe visibility for a driver. Further, the nozzle may be used as a first nozzle in combination with a second nozzle located at said another end of the wiper rod arranged to be connected to the elongated wiper blade for spraying a washing liquid onto the windscreen to be wiped. Hence, in that case the washing liquid is sprayed from at least two locations on the windscreen wiper arm onto the windscreen to be wiped, namely washing liquid exiting from the first nozzle connected at said one end of the wiper rod that extends inside the U-shaped cross-section of the wiper arm member, as well as washing liquid exiting from the second nozzle connected at said another end of the wiper rod that is arranged to be connected to the wiper blade. Thus, the windscreen can be cleaned efficiently over a very large wiping area thereof, particularly at high speeds. In that case, the first and second nozzles are preferably connected to only one inlet for the washing fluid, so that the first and second nozzles are in liquid contact with each other.

Japanese patent publication no. JP 2002 308064 discloses a windscreen wiper arm according to the preamble of claim 1.

It is noted that the present invention is not restricted to cars, but also refers to rail coaches and other (fast) vehicles.

In a preferred embodiment of a windscreen wiper arm in accordance with the invention said nozzle has a substantially U-shaped cross-section having a base and two spaced-apart sidewalls, wherein said sidewalls in use facing away from the windscreen to be wiped (i.e. in use facing towards a base of the U-shaped cross-section of the wiper arm member) are snapped around said wiper rod. Said base and said sidewalls of the U-shaped cross-section of said nozzle particularly define a guiding groove for slidingly guiding said nozzle in longitudinal direction onto said wiper rod.

In a windscreen wiper arm according to the invention said wiper rod near said one end thereof that extends inside the U-shaped cross-section of the wiper arm member is bend outwardly and comprises a hole for hooking an end of a spring therein.

In a windscreen wiper arm in accordance with the invention said windscreen wiper arm comprises said spring inside the U-shaped cross-section of the wiper arm member, said spring at one end thereof being arranged to be connected to said mounting head and at another end thereof being arranged to be connected to said wiper rod through said hole (i.e. an end of said spring hooking in said hole), wherein a movement of said nozzle in longitudinal direction is blocked by said spring in a direction towards said mounting head, and by tapering sidewalls of the U-shaped cross-section of the wiper arm member in a direction away from said mounting head. Hence, the nozzle is not allowed to move in longitudinal direction once being snapped onto said wiper rod, as it is "trapped" between the spring and the tapering sidewalls of the U-shaped cross-section of the wiper arm member. Thus, the nozzle is a universal nozzle in the sense that it is blocked against any longitudinal movement, also in the case when wiper arm members mutually differ in the width of their U-shaped cross-sections.

In a further preferred embodiment of a windscreen wiper arm according to the invention said nozzle comprises two spraying openings for spraying the washing fluid onto the windscreen to be wiped.

In a further preferred embodiment of a windscreen wiper arm in accordance with the invention said nozzle comprises an inlet pipe for conveying the washing liquid towards the nozzle, as well as an outlet pipe for conveying the washing liquid away from the nozzle. Preferably, said nozzle is a first nozzle, wherein said outlet pipe is arranged to convey the washing liquid away from the first nozzle and towards a second nozzle located near said another end of said wiper rod.

In a further preferred embodiment of a windscreen wiper arm according to the invention said wiper arm member is made integrally from a single sheet material, wherein parts of said sheet material are folded outwardly to form legs of the U-shaped cross-section of said wiper arm member, and wherein said legs of the U-shaped cross-section of said wiper arm member are locally folded around said wiper rod near said another end thereof that extends inside the U-shaped cross-section of the wiper arm member.

In a further preferred embodiment of a windscreen wiper arm in accordance with the invention said wiper rod at said another end thereof is arranged to be pivotally connected through a bayonet connection to an elongated wiper blade of the flat blade type.

The present invention also relates to a method for manufacturing a windscreen wiper arm, particularly for automobiles, being able to oscillate to-and-from between a first reversal position and a second reversal position, and comprising a wiper arm member having a substantially U-shaped cross-section, as well as a wiper rod, wherein said wiper arm member at one end thereof is arranged to be pivotally connected to a mounting head mounted on a drive shaft, and wherein said wiper arm member at another end thereof is rigidly connected to said wiper rod, wherein said wiper rod at one end thereof extends inside the U-shaped cross-section of the wiper arm member, and wherein said wiper rod at another end thereof is arranged to be connected to an elongated wiper blade to be placed in abutment with a windscreen to be wiped, and wherein said windscreen wiper arm comprises a spring inside the U-shaped cross-section of the wiper arm member, said spring at one end thereof being arranged to be connected to said mounting head and at another end thereof being arranged to be connected to said wiper rod, characterized in that said windscreen wiper arm is provided with a nozzle for spraying a washing liquid onto said windscreen to be wiped, wherein said nozzle is detachably connected to said wiper rod inside the U-shaped cross-section of the wiper arm member.

The invention will now be explained in more detail with reference to figures illustrated in a drawing, wherein:
- Figures 1 and 2 are schematic views from a side (figure 1) and from below (figure 2), respectively, of a windscreen wiper arm in a wiping position equipped with a wiper blade of the flat blade type;
- Figure 3 shows a part of the windscreen wiper arm of figures 1 and 2, partly in cross-section (seen from a side thereof) and open from above, wherein it is shown in steps along directions indicated by arrows how a nozzle is mounted thereon;
- Figure 4 is a bottom view of a part of the windscreen wiper arm of figures 1 and 2 with the nozzle of figure 3 mounted, as well as two cross-sectional views along the lines A-A and C-C of said bottom view;
- Figures 5, 6 and 7 are a perspective view, side view and front view, respectively, of the nozzle according to the invention to be used in the oscillating arm of figures 3 and 4; and
- Figure 8 is a perspective front view of the nozzle of figures 5, 6 and 7.

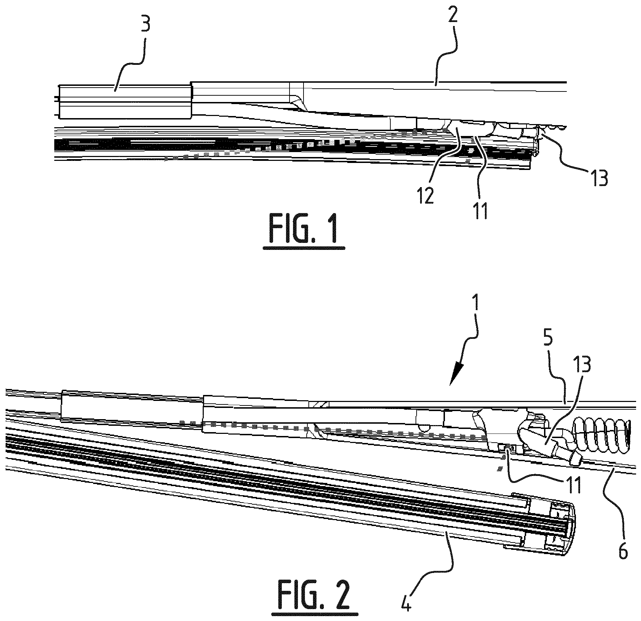

Figures 1 and 2 show a windscreen wiper arm 1, particularly for automobiles, being able to oscillate to-and-from between a first reversal position and a second reversal position over a windscreen to be wiped (not shown). The windscreen wiper arm 1 includes a wiper arm member 2 having a substantially U-shaped cross-section, as well as a wiper rod 3. Said wiper arm member 2 at a first free end thereof is arranged to be pivotally connected to a mounting head (not shown) mounted on a drive shaft (not shown). The drive shaft is rotatable by a small motor alternately in a clockwise and in a counter-clockwise sense carrying said mounting head into rotation. Thus, in turn said mounting head draws said windscreen wiper arm 1 into rotation and thereby moves a flat blade 4 connected thereto. Said wiper arm member 2 at second free end thereof (opposite to its first free end) is rigidly connected to said wiper rod 3. The wiper arm member 2 is made integrally from a single sheet material, for example a metal, wherein parts of said sheet material are folded outwardly to form legs 5, 6 of the U-shaped cross-section of said wiper arm member 2, and wherein said legs 5, 6 of the U-shaped cross-section of said wiper arm member 2 are locally folded around said wiper rod 3 to form their rigid interconnection. As shown, the wiper rod 3 at a first free end thereof extends inside the U-shaped cross-section of the wiper arm member 2. The wiper rod 3 at a second free end thereof (opposite to its first free end) is connected to the flat blade 4 to be placed in abutment with a windscreen to be wiped.

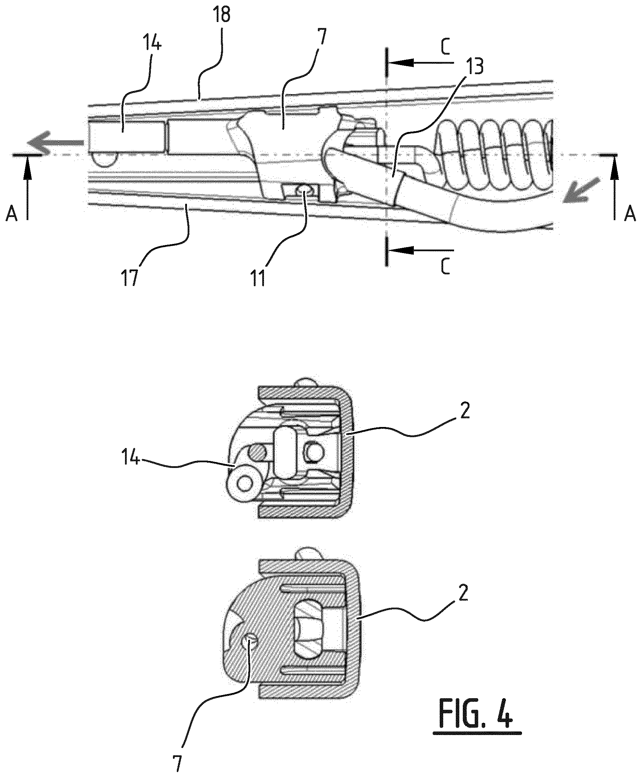

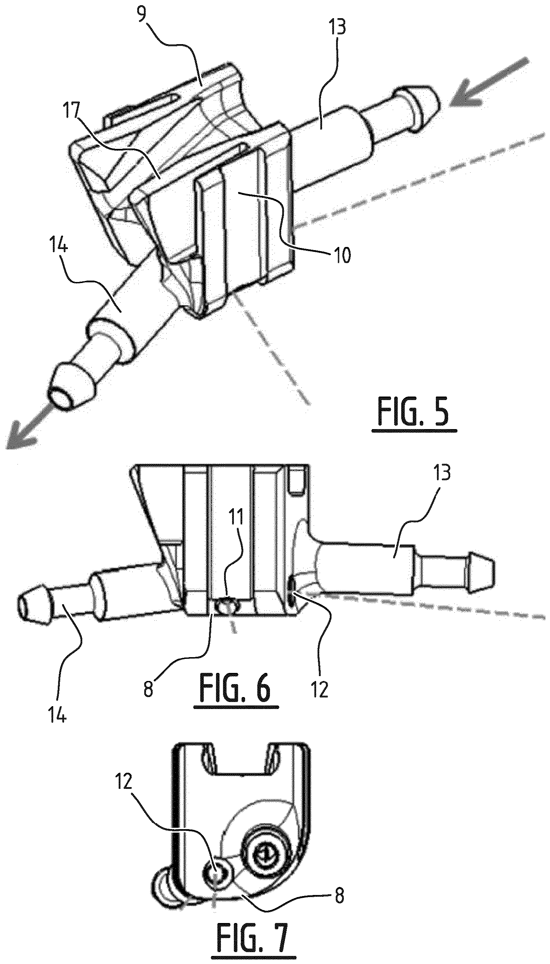

As shown in figures 1 and 2 and more in detail in figures 4 through 7, said windscreen wiper arm 1 is provided with a nozzle 7 for spraying a washing liquid onto the windscreen to be wiped. Said nozzle 7 is detachably snapped to said wiper rod 3 inside the U-shaped cross-section of the wiper arm member 2 to allow its repair and/or replacement. Said nozzle 7 has a substantially U-shaped cross-section having a base 8 and two spaced-apart sidewalls 9, 10, wherein said sidewalls 9,10 in use facing away from the windscreen to be wiped are snapped around said wiper rod 3. Said nozzle 7 comprises two spraying openings 11, 12 for spraying the washing fluid onto the windscreen to be wiped. Further, said nozzle 7 comprises an inlet pipe 13 for conveying the washing liquid towards the nozzle 7, as well as an outlet 14 pipe for conveying the washing liquid away from the nozzle. Often in practice, said nozzle 7 is a first nozzle, wherein said outlet pipe 14 is arranged to convey the washing liquid away from the first nozzle 7 and towards a second nozzle (not shown) located near said another end of said wiper rod 3. Hence, both nozzles are connected to a common reservoir for the washing liquid, so that in practice washing liquid is sprayed onto the windscreen to be wiped as from these two nozzles at a small distance relative to the windscreen to be wiped, while following the oscillatory movements of the windscreen wiper arm 1.

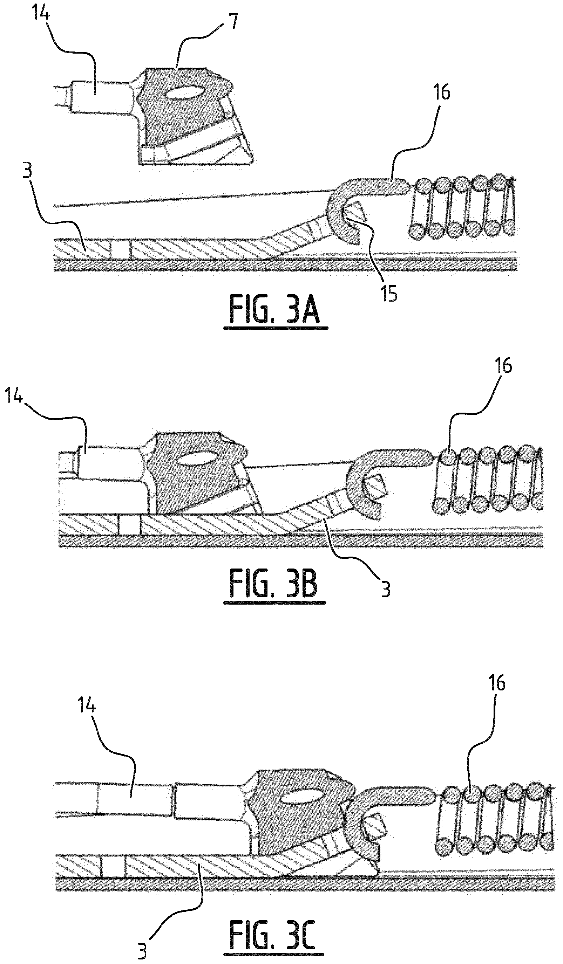

As shown in figure 3, said wiper rod 3 near said one end thereof that extends inside the U-shaped cross-section of the wiper arm member 2 is bend outwardly and comprises a hole 15 for hooking an end of a spring 16 therein. While resting inside the U-shaped cross-section of the wiper arm member 2, said spring 16 at one end thereof is connected to said mounting head (not shown) and at another end thereof is connected to said wiper rod 3 through said hole 15. Hence, a movement of said nozzle 7 in longitudinal direction is blocked by said spring 16 in a direction towards said mounting head, and by tapering sidewalls 17, 18 of the U-shaped cross-section of the wiper arm member 2 in a direction away from said mounting head. With reference to figure 3, first said nozzle 7 is mounted inside the U-shaped cross-section of the wiper arm member 2 in the direction of the arrow of figure 3a, i.e. in transverse direction perpendicular to the longitudinal direction of the wiper arm 1. Secondly, according to figure 3b the nozzle 7 is then slided in longitudinal direction towards the spring 16 (that is: in the direction of the arrow of figure 3b). Said sliding movement is completed until the sidewalls 9, 10 of the nozzle 7 are snapped around the wiper rod 3 (figure 3c). In this respect it is noted that said base 8 and said sidewalls 9, 10 of the U-shaped cross-section of said nozzle 7 define a guiding groove 17 for slidingly guiding said nozzle 7 in longitudinal direction onto said wiper rod 3.

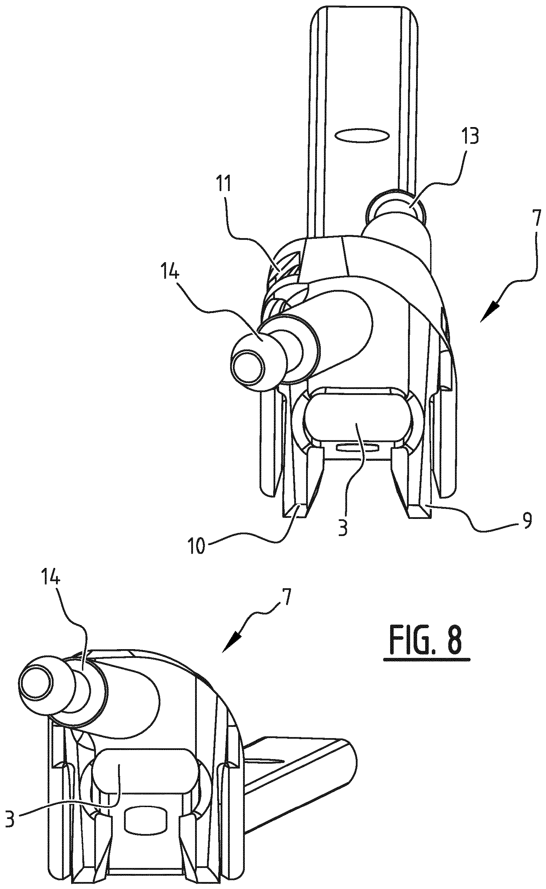

In figure 8 the nozzle 7 is shown in a front view, wherein corresponding parts have been designated with the same reference numerals.

The present invention is not restricted to the embodiment shown in the figures, but extends also to other preferred variants falling within the scope of the appended claims.

## Claims

1. A windscreen wiper arm (1), particularly for automobiles, being able to oscillate to-and-from between a first reversal position and a second reversal position, and comprising a wiper arm member (2) having a substantially U-shaped cross-section, as well as a wiper rod (3), wherein said wiper arm member (2) at one end thereof is arranged to be pivotally connected to a mounting head mounted on a drive shaft, and wherein said wiper arm member (2) at another end thereof is rigidly connected to said wiper rod (3), wherein said wiper rod (3) at one end thereof extends inside the U-shaped cross-section of the wiper arm member (2), and wherein said wiper rod (3) at another end thereof is arranged to be connected to an elongated wiper blade (4) to be placed in abutment with a windscreen to be wiped, wherein said windscreen wiper arm (1) is provided with a nozzle (7) for spraying a washing liquid onto said windscreen to be wiped, wherein said nozzle (7) is detachably connected to said wiper rod (3) inside the U-shaped cross-section of the wiper arm member (2), **characterized in that** said wiper rod (3) near said one end thereof that extends inside the U-shaped cross-section of the wiper arm member (2) is bend outwardly and comprises a hole (15) for hooking an end of a spring (16) therein, wherein said windscreen wiper arm (1) comprises said spring (16) inside the U-shaped cross-section of the wiper arm member (2), said spring (16) at one end thereof being arranged to be connected to said mounting head and at another end thereof being arranged to be connected to said wiper rod (3) through said hole (15), and wherein a movement of said nozzle (7) in longitudinal direction is blocked by said spring (16) in a direction towards said mounting head, and by tapering sidewalls (17, 18) of the U-shaped cross-section of the wiper arm member (2) in a direction away from said mounting head.

2. A windscreen wiper arm (1) according to claim 1, wherein said nozzle (7) is snapped onto said wiper rod (3) near said one end thereof that extends inside the U-shaped cross-section of the wiper arm member (2).

3. A windscreen wiper arm (1) according to claim 1 or 2, wherein said nozzle (7) has a substantially U-shaped cross-section having a base (8) and two spaced-apart sidewalls (9, 10), and wherein said sidewalls (9, 10) in use facing away from the windscreen to be wiped are snapped around said wiper rod (3).

4. A windscreen wiper arm (1) according to claim 3, wherein said base (8) and said sidewalls (9, 10) of the U-shaped cross-section of said nozzle (7) define a guiding groove (17) for slidingly guiding said nozzle (7) in longitudinal direction onto said wiper rod (3).

5. A windscreen wiper arm (1) according to any of the preceding claims 1 through 4, wherein said nozzle (7) comprises two spraying openings (11, 12) for spraying the washing fluid onto the windscreen to be wiped.

6. A windscreen wiper arm (1) according to any of the preceding claims 1 through 5, wherein said nozzle (7) comprises an inlet pipe (13) for conveying the washing liquid towards the nozzle (7), as well as an outlet pipe (14) for conveying the washing liquid away from the nozzle (7).

7. A windscreen wiper arm (1) according to claim 6, wherein said nozzle (7) is a first nozzle, and wherein said outlet pipe (14) is arranged to convey the washing liquid away from the first nozzle (7) and towards a second nozzle located near said another end of said wiper rod (3).

8. A windscreen wiper arm (1) according to any of the preceding claims 1 through 7, wherein said wiper arm member (2) is made integrally from a single sheet material, wherein parts of said sheet material are folded outwardly to form legs (5, 6) of the U-shaped cross-section of said wiper arm member (2), and wherein said legs (5, 6) of the U-shaped cross-section of said wiper arm member (2) are locally folded around said wiper rod (3) near said another end thereof that extends inside the U-shaped cross-section of the wiper arm member (2).

9. A windscreen wiper arm (1) according to any of the preceding claims 1 through 8, wherein said wiper rod (3) at said another end thereof is arranged to be pivotally connected through a bayonet connection to an elongated wiper blade (4) of the flat blade type.

## Patentansprüche

1. Scheibenwischerarm (1), insbesondere für Automobile, der imstande ist, zu und von zwischen einer ersten Umkehrposition und einer zweiten Umkehrposition zu oszillieren, und umfassend ein Wischerarmelement (2) mit einem im Wesentlichen U-förmigen Querschnitt sowie eine Wischerstange (3), wobei das Wischerarmelement (2) an einem Ende davon angeordnet ist, schwenkbar mit einem Montagekopf, der auf einer Antriebswelle befestigt ist, verbunden zu sein, und wobei das Wischerarmelement (2) an einem anderen Ende davon starr mit der Wischerstange (3) verbunden ist, wobei sich die Wischerstange (3) an einem Ende davon innerhalb des U-förmigen Querschnitts des Wischerarmelements (2) erstreckt, und wobei die Wischerstange (3) an einem anderen Ende davon angeordnet ist, um mit einem länglichen Wischerblatt (4) verbunden zu sein, um anliegend an einer zu wischenden Scheibe angeordnet zu sein, wobei der Scheibenwischerarm (1) mit einer Düse (7) zum Sprühen einer Waschflüssigkeit auf die zu wischende Scheibe bereitgestellt ist, wobei die Düse (7) innerhalb des U-förmigen Querschnitts des Wischerarmelements (2) lösbar mit der Wischerstange (3) verbunden ist,
**gekennzeichnet dadurch, dass** die Wischerstange (3) in der Nähe des einen Endes davon, das sich innerhalb des U-förmigen Querschnitts des Wischerarmelements (2) erstreckt, nach außen gebogen ist und ein Loch (15) zum Einhaken eines Endes einer Feder (16) darin umfasst, wobei der Scheibenwischerarm (1) die Feder (16) innerhalb des U-förmigen Querschnitts des Wischerarmelements (2) umfasst, wobei die Feder (16) an einem Ende davon angeordnet ist, um mit dem Montagekopf verbunden zu sein, und an einem anderen Ende davon angeordnet ist, um mit der Wischerstange (3) durch das Loch (15) verbunden zu sein, und wobei eine Bewegung der Düse (7) in Längsrichtung blockiert wird durch die Feder (16) in einer Richtung zu dem Montagekopf und durch sich verjüngende Seitenwände (17, 18) des U-förmigen Querschnitts des Wischerarmelements (2) in einer Richtung weg von dem Montagekopf.

2. Scheibenwischerarm (1) nach Anspruch 1, wobei die Düse (7) auf die Wischerstange (3) in der Nähe des einen Endes davon, das sich innerhalb des U-förmigen Querschnitts des Wischerarmelements (2) erstreckt, aufgeschnappt ist.

3. Scheibenwischerarm (1) nach Anspruch 1 oder 2, wobei die Düse (7) einen im Wesentlichen U-förmigen Querschnitt mit einer Basis (8) und zwei beabstandeten Seitenwänden (9, 10) aufweist und wobei die Seitenwände (9, 10), die abgewandt von der zu wischenden Scheibe verwendet werden, um die Wischerstange (3) geschnappt sind.

4. Scheibenwischerarm (1) nach Anspruch 3, wobei die Basis (8) und die Seitenwände (9, 10) des U-förmigen Querschnitts der Düse (7) eine Führungsnut (17) zum gleitenden Führen der Düse (7) in Längsrichtung auf die Wischerstange (3) definieren.

5. Scheibenwischerarm (1) nach einem der vorhergehenden Ansprüche 1 bis 4, wobei die Düse (7) zwei Sprühöffnungen (11, 12) zum Sprühen der Waschflüssigkeit auf die zu wischende Scheibe umfasst.

6. Scheibenwischerarm (1) nach einem der vorhergehenden Ansprüche 1 bis 5, wobei die Düse (7) ein Einlassrohr (13) zum Fördern der Waschflüssigkeit zu der Düse (7) sowie ein Auslassrohr (14) zum Fördern der Waschflüssigkeit weg von der Düse (7) umfasst.

7. Scheibenwischerarm (1) nach Anspruch 6, wobei die Düse (7) eine erste Düse ist und wobei das Auslassrohr (14) angeordnet ist, um die Waschflüssigkeit weg von der ersten Düse (7) und zu einer zweiten Düse, die sich in der Nähe des anderen Endes der Wischerstange (3) befindet, zu fördern.

8. Scheibenwischerarm (1) nach einem der vorhergehenden Ansprüche 1 bis 7, wobei das Wischerarmelement (2) einstückig aus einem einzelnen Blattmaterial hergestellt ist, wobei Teile des Blattmaterials nach außen gefaltet sind, um Schenkel (5, 6) des U-förmigen Querschnitts des Wischerarmelements (2) zu bilden, und wobei die Schenkel (5, 6) des U-förmigen Querschnitts des Wischerarmelements (2) lokal um die Wischerstange (3) in der Nähe des anderen Endes davon, das sich innerhalb des U-förmigen Querschnitts des Wischerarmelements (2) erstreckt, gefaltet sind.

9. Scheibenwischerarm (1) nach einem der vorhergehenden Ansprüche 1 bis 8, wobei die Wischerstange (3) an dem anderen Ende davon angeordnet ist, um über eine Bajonettverbindung schwenkbar mit einem länglichen Wischerblatt (4) des Flachblatttyps verbunden zu sein.

## Revendications

1. Bras de balai d'essuie-glace (1), destiné en particulier à des automobiles, pouvant osciller entre une première position d'inversion et une seconde position d'inversion, et comprenant un élément bras de balai (2) qui présente une section transversale sensiblement en forme de U, ainsi qu'une tige de balai (3), dans lequel ledit élément bras de balai (2), au niveau d'une extrémité de celui-ci, est agencé pour être connecté de manière pivotante à une tête de montage, montée sur un arbre d'entraînement, et dans lequel ledit élément bras de balai (2), au niveau d'une autre extrémité de celui-ci, est connecté de manière rigide à ladite tige de balai (3), dans lequel ladite tige de balai (3), au niveau d'une extrémité de celle-ci, s'étend à l'intérieur de la section transversale en forme de U de l'élément bras de balai (2), et dans lequel ladite tige de balai (3), au niveau d'une autre extrémité de celle-ci, est agencée pour être connectée à une lame de balai allongée (4) à placer en butée avec un pare-brise à essuyer, dans lequel ledit bras de balai d'essuie-glace (1) est doté d'une buse (7) destinée à pulvériser un liquide de lavage sur ledit pare-brise à essuyer, dans lequel ladite buse (7) est connectée de manière amovible à ladite tige de balai (3) à l'intérieur de la section transversale en forme de U de l'élément bras de balai (2),
**caractérisé en ce que** ladite tige de balai (3), à proximité de ladite première extrémité de celle-ci qui s'étend à l'intérieur de la section transversale en forme de U de l'élément bras de balai (2), est courbée vers l'extérieur, et comprend un trou (15) destiné à y accrocher une extrémité d'un ressort (16), dans lequel ledit bras de balai d'essuie-glace (1) comprend ledit ressort (16) à l'intérieur de la section transversale en forme de U de l'élément bras de balai (2), ledit ressort (16), à une extrémité de celui-ci, étant agencé pour être connecté à ladite tête de montage, et à une autre extrémité de celui-ci, étant agencé pour être connecté à ladite tige de balai (3) à travers ledit trou (15), et dans lequel un déplacement de ladite buse (7) dans la direction longitudinale, est bloqué par ledit ressort (16) dans une direction vers ladite tête de montage, et par les parois latérales effilées (17, 18) de la section transversale en forme de U de l'élément bras de balai (2) dans la direction en s'éloignant de ladite tête de montage.

2. Bras de balai d'essuie-glace (1) selon la revendication 1, dans lequel ladite buse (7) est encliquetée sur ladite tige de balai (3) à proximité d'une extrémité de celle-ci qui s'étend à l'intérieur de la section transversale en forme de U de l'élément bras de balai (2).

3. Bras de balai d'essuie-glace (1) selon la revendication 1 ou 2, dans lequel ladite buse (7) présente une section transversale sensiblement en forme de U, avec une base (8) et deux parois latérales espacées (9, 10), et dans lequel lesdites parois latérales (9, 10), en service, qui se font face en s'éloignant du pare-brise à essuyer, sont encliquetées autour de ladite tige de balai (3).

4. Bras de balai d'essuie-glace (1) selon la revendication 3, dans lequel ladite base (8) et lesdites parois latérales (9, 10) de la section transversale en forme de U de ladite buse (7), définissent une rainure de guidage (17) destinée à guider de manière coulissante ladite buse (7) dans la direction longitudinale sur ladite tige de balai (3).

5. Bras de balai d'essuie-glace (1) selon l'une quelconque des revendications précédentes 1 à 4, dans lequel ladite buse (7) comprend deux ouvertures de pulvérisation (11, 12) destinées à pulvériser le fluide de lavage sur le pare-brise à essuyer.

6. Bras de balai d'essuie-glace (1) selon l'une quelconque des revendications précédentes 1 à 5, dans lequel ladite buse (7) comprend un tuyau d'entrée (13) destiné à acheminer le liquide de lavage vers la buse (7), ainsi qu'un tuyau de sortie (14) destiné à acheminer le liquide de lavage éloignant de la buse (7).

7. Bras de balai d'essuie-glace (1) selon la revendication 6, dans lequel ladite buse (7) est première buse, et dans lequel ledit tuyau de sortie (14) est agencé pour acheminer le liquide de lavage en s'éloignant de la première buse (7), et vers une seconde buse située à proximité de ladite autre extrémité de ladite tige de balai (3).

8. Bras de balai d'essuie-glace (1) selon l'une quelconque des revendications précédentes 1 à 7, dans lequel ledit élément bras de balai (2) est réalisé d'une pièce à partir d'un matériau de feuille unique, dans lequel des parties dudit matériau de feuille unique, sont pliées vers l'extérieur afin de former des jambes (5, 6) de la section transversale en forme de U dudit élément bras de balai (2), et dans lequel lesdites jambes (5, 6) de la section transversale en forme de U dudit élément bras de balai (2), sont pliées localement autour de ladite tige de balai (3) à proximité de ladite autre extrémité de celle-ci, qui s'étend à l'intérieur de la section transversale en forme de U de l'élément bras de balai (2).

9. Bras de balai d'essuie-glace (1) selon l'une quelconque des revendications précédentes 1 à 8, dans lequel ladite tige de balai (3), au niveau de ladite autre extrémité de celle-ci, est agencée de façon à être connectée de manière pivotante par l'intermédiaire d'une connexion à baïonnette, à une lame de balai allongée (4) du type à lame plate.
